# EUROPEAN PATENT SPECIFICATION

(11) **EP 1 685 333 B1**
(45) Date of publication and mention of the grant of the patent: **27.02.2008**
(21) Application number: 03768112.9
(22) Date of filing: 19.11.2003
(51) Int. Cl.: F16D 7/08

(54) **CLUTCH, PARTICULARLY FOR MOTORCYCLES**
KUPPLUNG, INSBESONDERE FÜR MOTORRAD
EMBRAYAGE, EN PATRTICULIER POUR MOTOCYCLES

(43) Date of publication of application: 02.08.2006
(73) Proprietor: STRADA S.r.l., 10023 Chieri (TO) (IT)
(72) Inventor: STRADA, Vito, I-10023 Chieri (IT)
(74) Representative: Spandonari, Carlo
(86) International application number: PCT/IT2003/000752
(87) International publication number: WO 2005/050045

(56) References cited:
- EP-A- 0 854 304
- DE-U- 8 518 371
- US-A- 2 146 044
- US-A- 4 896 755

## Description

The present invention relates to a clutch for vehicles, particularly for motorcycles.

For a gradual transmission of the driving torque to the driveline, the clutches make use of two, mutually linked sets of clutch plates which are respectively connected to a driving member and to a driven member, by pressing and releasing the plates by means of a Belleville washer that is supported on the driving member and whose peripheral edge engages a counter-ledge of the driven member.

Moreover, when shifting down gear, particularly in high-performance vehicles such as sport motorcycles, rapid torque reverses are generated with high differentials which may cause the engine to be overloaded up to breaking. Therefore, EP-A-854 304 describes a friction clutch for motorcycles which is provided with a device providing the automatic clutch disengagement as soon as a maximum inverse-torque threshold is reached. Such device makes use of balls engaged between inclines to disengage the members of the friction clutch as soon as a predetermined inverse-torque threshold is exceeded. The threshold is adjustable by changing features such as the inclination of the planes, the elastic coefficient of the spring, etc.

Although the clutch of the above-mentioned European document effectively performs its function of limiting the inverse torque to a predetermined threshold, however, in particular operative conditions, mainly in presence of wear of the rolling surfaces, it is liable to jamming because the balls, which are free to roll between the inclines, may escape from their tracks and become seized between the driving member and the driven member.

DE 85 18 371 is another example of a device for transmitting the torque which makes use of rolling members. DE 85 18 371 describes a joint in which the torque is transmitted via two rings of rollers axially pushed against each other by a spring, whereby a limitation of the maximum torque is provided by the rollers of one ring stepping over the rollers of the other ring.

A main object of the present invention is now to provide a clutch, particularly for motorcycles, which is provided with an automatic, clutch-disengaging device that is improved with respect to the above-mentioned, prior device in order to prevent jamming.

The above mentioned object and other aims and advantages, which will better appear below, are achieved by a clutch having the features recited in claim 1, while the dependent claims state other advantageous, though non-essential features.

The invention will now be described in more detail with reference to a preferred, non-exclusive embodiment, shown by way of non-limiting example in the attached drawings, wherein:
Fig. 1 is a front view of the clutch for motorcycles according to the invention;

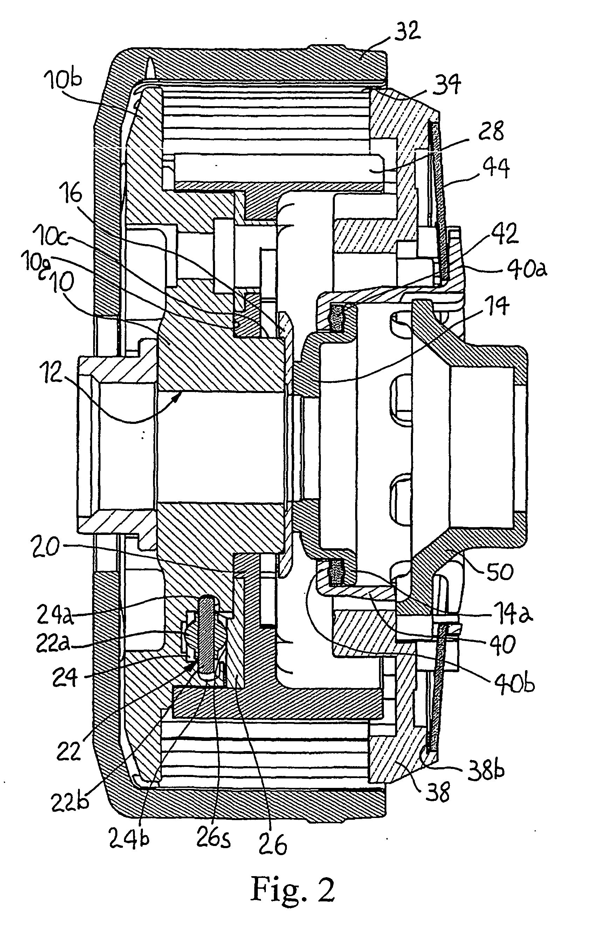

Fig. 2 is a cross-section view along line II-II and to an enlarged scale of the clutch of Fig. 1;
Fig. 3 is a front view to an enlarged scale of a detail of the clutch of Fig. 1;

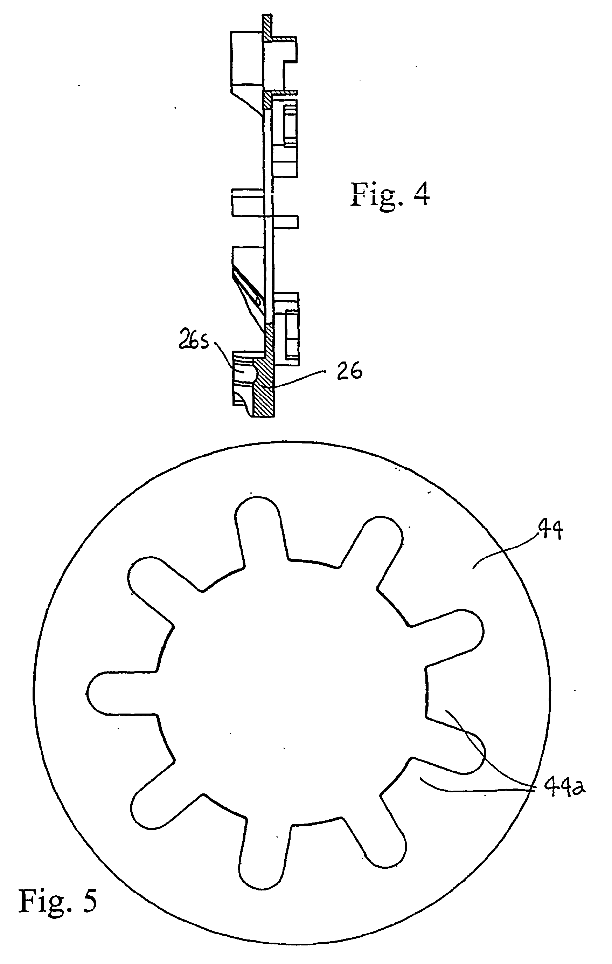

Fig. 4 is a cross-section view along line IV-IV of the detail of Fig. 3;
Fig. 5 is a front view of a further detail of the clutch.

With reference to the above-mentioned figures, a friction clutch comprises a hub 10 having an axial, cylindrical housing 12 to be keyed, in a way known per se, onto a driving shaft (not shown) together with a counter-hub 14 and a ring 16 between them.

An axially slidable cylinder 20 is pivotally supported on a cylindrical seat 10c of hub 10 and, according to this invention, is coupled with hub 10 via rollers 22. Rollers 22 are pivotally supported about a radial axis in respective, equally spaced slots 24 made on a plate 10b of hub 10 and engage respective inclines 26s made on a steel plate 26 that is frontally laid on cylinder 20.

Each roll consists of a ball 22a that is diametrically supported by a pin 22b whose ends are pivotally engaged in holes 24a, 24b made on the side walls of slot 24. Cylinder 20 is elastically butted against hub 10 by means of an elastic member (not shown) compressed between ring 16 and the hub.

The perimeter of hub 20 has longitudinal grooves 28 which are engaged, in a known way, by respective internal toothing of driving clutch plates (not shown). A basket-shaped, driven member 32 is pivotally supported around hub10 and cylinder 20 and has channels such as 34 which are engaged by driven clutch plates (not shown), which are alternated with the driving plates to form a pack of plates that are alternatively connected to hub 20 and basket 32.

The pack of plates is axially constrained between a ledge 10b of the hub and a plate-pushing cap 38 that is externally provided with a circumferential ledge 38b having an hardened coating on the opposite side of the surface in contact with the plates.

Counter-hub 14 has an external ledge 14a engaged by a thrust ball-bearing 42 consisting in a know way of a crown of balls constrained in a cage. A sleeve 40 has an abutment 40b which pushes ball-bearing 42 against the external ledge 14a of the counter-hub and, at the opposite end, sleeve 40 has a plurality of radial claws 40a. A spider spring 44 is constrained between the circumferential ledge 38b of cap 38 and the claws 40a of the sleeve. Spider spring 44 consists of a conical plate of sheet steel having a central hole and cut with radial slots to form a plurality of radial fongers such as 44a which are engaged by claws 40a.

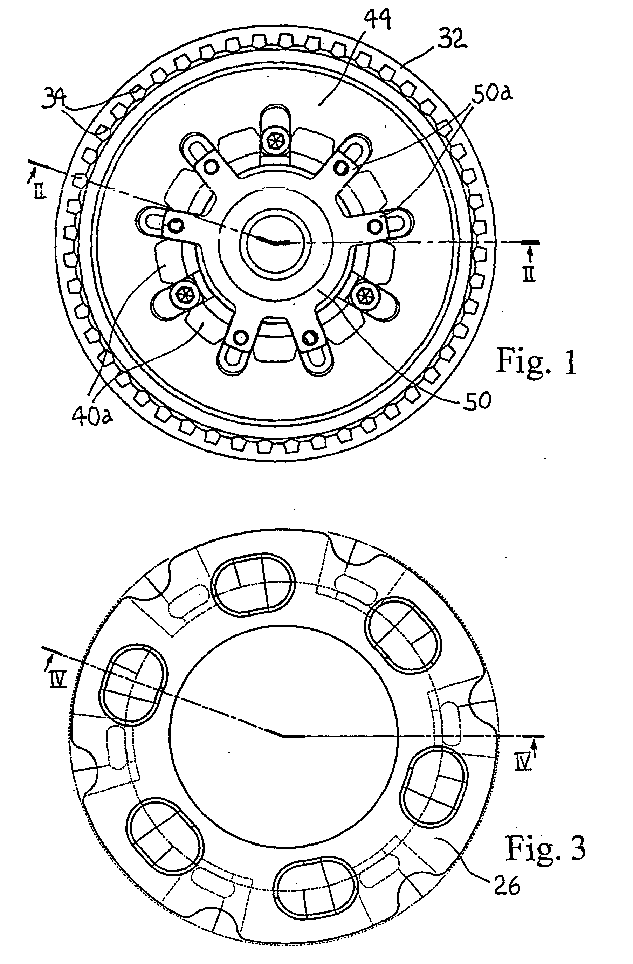

A conical member 50 that is coaxial to cap 34 has a plurality of radial brackets such as 50a which project between claws 40a of sleeve 40 and are screwed to cap 34. The conical member is normally in a resting position, and can be pushed or pulled rightward (as seen in Fig. 1) by means of known means (not shown) against spider spring 44 for withdrawing cap 38 from the pack of plates, thereby disengaging the clutch.

The set of rollers 22 housed in the slots 24 engages disc 26 to form an automatic clutch-disengaging device operating as soon as maximum inverse torque threshold is reached, which is similar in its operation to the known device described in the prior, above-mentioned European document. As soon as a predetermined inverse-torque threshold is exceeded, rollers 22 roll along their respective inclines 26s causing cylinder 20 to be axially withdrawn from hub 10, to abut against pressing cap 38 and to move the latter away from the pack of plates in opposition to spider spring 44, thereby causing the clutch disengagement. The threshold required to cause the disengagement is adjustable in a known way by changing features such as the inclination of the planes, the elastic coefficient of the spring, etc.

Since rollers 22 are constrained to rotate in association with the hub, any jamming is prevented while it could occur in case of balls free to roll between inclines, should one or more balls escape. Furthermore, since the inclines are made on a steel plate laid on the cylinder and made of an aluminium alloy for reduction of weights, wear is reduced a longer mechanical life for the device is achieved.

A preferred embodiment of the invention has been described, but of course many changes may be made by a person skilled in the art, depending on the requirements, within the scope of the inventive concept. For example, rollers 22 can be made enbloc and the inclines can be directly made on the cylinder, should it be made of a wearproof material.

## Claims

1. A friction clutch for vehicles, comprising a driving member (10) and a driven member (32) coaxial to the driving member, with a pack of clutch plates between them which are alternatively connected to the driving member and to the driven member, a pressure member (38) engaged by elastic means (44) to push the clutch plates against a ledge (10b) of the driving member, a floating member (20) that is axially translatable between the driving member (10) and the pressure member (38), and driving means (22, 24, 26) on said driving member and floating member which are in mutual, rotary and shifting engagement to axially push the floating member (20) against the pressure member in contrast to said elastic means, **characterized in that** said driving means comprise rollers (22) each pivotally supported by said driving member (10) about a substantially radial axis to engage respective inclines (26s) formed on a plate member (26) made of a wearproof material, which is applied frontally to the floating member (20).

2. The friction clutch of claim 1, **characterized in that** each roller has a substantially spherical, middle portion (22a) and two opposite, diametrical ends.

3. The friction clutch of claim 2, **characterized in that** said substantially spherical, middle portion (22a) is diametrically supported on a pin (22b) and said opposite, diametrical ends are the ends of the pin.

4. The friction clutch of any of claims 1 to 3, **characterized in that** said rollers (22) are arranged in respective, equally spaced slots (24) made on the driving member and said opposite, diametrical ends are engaged in holes (24a, 24b) made on the side walls of the slot.

5. The friction clutch of anyone of claims 1 to 4, where that said pressure member consists of a cap (38) having an annular surface adapted to engage said clutch plates, **characterized in that** said elastic means consist of a spider spring (44) having a smaller base that is axially retained by retaining means (40) and a larger base that is elastically abutted against a circumferential abutment (38b) of the cup (38) on the opposite side of the annular surface.

## Patentansprüche

1. Rutschkupplung für Fahrzeuge, einschließlich Antriebselement (10) und angetriebenem Element (32), das zum Antriebselement coaxial ist, zwischen ihnen ein Paket Kupplungsscheiben, die alternativ mit dem Antriebselement und dem angetriebenen Element verbunden sind, ein Druckelement (38), in das ein elastisches Mittel (44) eingreift, um die Kupplungsscheiben gegen einen Vorsprung (10b) des Antriebselements zu drücken, ein Schwimmelement (20), das zwischen Antriebselement (10) und dem Druckelement (38) axial verstellbar ist, und Antriebsmittel (22, 24, 26) auf genanntem Antriebselement und Schwimmelement, in gegenseitiger, drehender, sich verschiebender Verbindung, um das Schwimmelement (20) im Gegensatz zum besagten elastischen Mittel axial gegen das Druckelement zu pressen, **dadurch gekennzeichnet, dass** das Antriebselement Rollen (22) enthält, von denen jede zentral durch das besagte Antriebselement (10) drehend gestützt wird, um eine im Wesentlichen radiale Achse, um in jeweilige geneigte Ebenen (26s) auf einem Scheibenelement (26) aus verschleißfreiem Material, das frontal auf dem Schwimmelement (20) aufgebracht ist, einzurasten.

2. Rutschkupplung nach Anspruch 1, **dadurch gekennzeichnet, dass** jede Rolle aus einem im Wesentlichen kugelförmigen, mittleren Teil (22a) und zwei diametral entgegengesetzten Enden besteht.

3. Rutschkupplung nach Anspruch 2, **dadurch gekennzeichnet, dass** der besagte im Wesentlichen kugelförmige mittlere Teil (22a) sich diametral auf einen Bolzen (22b) stützt und die besagten entgegengesetzten diametralen Enden die Enden des Bolzens darstellen.

4. Rutschkupplung nach den Ansprüchen 1 bis 3, **dadurch gekennzeichnet, dass** die besagten Rollen (22) in entsprechenden Schlitzen (24) im gleichen Abstand im Antriebselement und die besagten entgegengesetzten, diametralen Enden in Löcher (24a, 24b) in den Seitenwänden der Schlitze eingreifen.

5. Rutschkupplung nach den Ansprüchen 1 bis 4, bei der das besagte Druckelement aus einer Kappe (38) mit einer ringförmigen Oberfläche besteht, die geeignet ist, in die besagten Kupplungsscheiben einzugreifen, **dadurch gekennzeichnet, dass** das besagte elastische Element aus einer Sternfeder (44) besteht, mit einer kleineren Grundfläche, die axial durch eine Rückhaltevorrichtung (40) gehalten wird und einer größeren Grundfläche, die sich elastisch an einer umlaufenden Stütze (38b) des Außenrings (38) auf der entgegengesetzten Seite der ringförmigen Oberfläche abstützt.

## Revendications

1. Embrayage à friction pour véhicules, comprenant un organe de commande (10) et un organe commandé (32) coaxial à l'organe de commande avec, entre eux, un jeu de disques d'embrayage raccordés alternativement à l'organe de commande et à l'organe commandé, un élément de pression (38) retenu par un moyen élastique (44) pour presser les disques d'embrayage contre une saillie (10b) de l'organe de commande, un élément flottant (20) qui peut être axialement déplacé entre l'organe de commande (10) et l'élément de pression (38), et des moyens de commande (22, 24, 26) sur ledit organe de commande et ledit élément flottant qui sont retenus de manière réciproque, rotatoire et coulissante pour presser axialement l'élément flottant (20) contre l'élément de pression en contraste audit moyen élastique, **caractérisé par le fait que** ledit moyen de commande comprend des galets (22) chacun étant soutenu de manière rotative par ledit organe de commande (10) autour d'un axe essentiellement radial pour retenir les plans inclinés respectifs (26s) formés sur un élément à disque (26) réalisé dans un matériau anti-usure, qui est appliqué en amont de l'élément flottant (20).

2. Embrayage à friction selon la revendication 1, **caractérisé par le fait que** chaque galet a essentiellement une partie sphérique intermédiaire (22a) et deux extrémités diamétrales opposées.

3. Embrayage à friction selon la revendication 2, **caractérisé par le fait que** ladite partie essentiellement sphérique intermédiaire (22a) est diamétralement soutenue sur un axe (22b) et que lesdites extrémités diamétrales opposées sont les extrémités de l'axe.

4. Embrayage à friction selon l'une des revendications 1 à 3, **caractérisé par le fait que** lesdits galets (22) sont disposés dans des fentes respectives (24) à distances égales réalisées sur l'organe de commande et que lesdites extrémités diamétrales opposées sont retenues dans des trous (24a, 24b) réalisés sur les parois latérales de la fente.

5. Embrayage à friction selon l'une des revendications 1 à 4, où ledit élément de pression est composé d'un capuchon (38) ayant une surface annulaire apte à retenir lesdits disques d'embrayage, **caractérisé par le fait que** ledit élément élastique est composé d'un ressort araignée (44) ayant une base plus petite axialement retenue par un élément de retenue (40) et une base plus grande axialement appuyée contre une butée circonférentielle (38b) du carter (38) sur le côté opposé de la surface annulaire.
